# EUROPÄISCHE PATENTSCHRIFT

(11) **EP 1 525 133 B1**
(45) Veröffentlichungstag und Bekanntmachung des Hinweises auf die Patenterteilung: **23.05.2007**
(21) Anmeldenummer: 03740401.9
(22) Anmeldetag: 02.07.2003
(51) Int. Cl.: B62D 25/20

(54) **BODENVERSTEIFUNGSSTRUKTUR AN KRAFTFAHRZEUGEN**
FLOOR-STIFFENING STRUCTURE IN MOTOR VEHICLES
STRUCTURE DE RENFORT DE SOL POUR AUTOMOBILE

(30) Priorität: 19.07.2002 DE 10232842
(43) Veröffentlichungstag der Anmeldung: 27.04.2005
(73) Patentinhaber: Volkswagen Aktiengesellschaft, 38436 Wolfsburg (DE)
(72) Erfinder: MORSCH, Klaus-Dieter, 38102 Braunschweig (DE); HILLMANN, Jürgen, 38518 Gifhorn (DE)
(86) Internationale Anmeldenummer: PCT/EP2003/007041
(87) Internationale Veröffentlichungsnummer: WO 2004/009429

(56) Entgegenhaltungen:
- EP-A- 1 186 516
- DE-A- 10 059 261
- DE-C- 940 204
- GB-A- 516 727
- US-A- 5 562 329
- US-B1- 6 234 568

## Beschreibung

Die Erfindung betrifft eine Bodenversteifungsstruktur an Kraftfahrzeugen nach dem Oberbegriff des Anspruchs 1.

Aus der DE 37 20 946 C2 ist eine Bodengruppe für ein Kraftfahrzeug mit einem Antriebsaggregat abstützenden Längsträgern, die sich annähernd parallel zueinander jeweils bis zu einem Sitzquerträger erstrecken und unmittelbar danach bogenförmig nach außen in Richtung eines Schwellers geführt und an diesem festgelegt sind, bekannt. Im Wesentlichen werden hier beispielsweise infolge eines Frontalcrashes eingeleitete Kräfte in die Sitzquerträger und Schweller eingeleitet.

Des Weiteren ist es bekannt, die vorderen Enden der Längsträger jeweils annähernd parallel bis zum vorderen Fahrgastzellenbereich und anschließend mit einer stumpfwinkligen Abbiegung schräg nach außen zu einem Schweller zu führen, an dem sie festgelegt sind

(DE 39 05 650 C2, DE 39 25 990 A1, DE 198 56 980 A1). Auch hier werden lediglich Teilbereiche der Fahrzeugkarosserie an der Kraftweiterleitung und -aufnahme beteiligt. Ferner sind infolge der stumpfwinkligen Abbiegung der Längsträger dieselben bei erhöhter Belastung besonders für ein Abknicken anfällig und können damit die Fahrgastzelle nachteilig verformen respektive in die Fahrgastzelle eindringen.

Aus der DE 199 54 575 A1 ist weiterhin ein Fahrzeug-Karosserierahmen bekannt, der seinerseits zwei nicht parallele Bodenlängsträger beinhaltet, deren vordere Enden näher zueinander angeordnet sind als die hinteren und Verbindungsabschnitte eines unteren Armaturenbrett-Querelementes mit einem vorderen Seitenrahmen und den seitlichen Enden eines hinteren Querelementes verbinden. An dem hinteren Querelement ist wiederum ein hinterer Seitenrahmen fest angeordnet. Als nachteilig ist herauszustellen, dass die Kraftweiterleitung bei einem Frontalcrash durch die Aufteilung des Fahrzeugkarosserierahmens in einen vorderen Seitenrahmen, einen hinteren Seitenrahmen und in ein Mittelteil mit den besagten Bodenlängsträgern sowie seitlich außen angeordneten Schwellern unterbrochen ist und demgemäß die Aufprallenergie lediglich undefiniert und durch einen relativ geringen Karosseriebereich aufgenommen werden kann.

Die US 6,234,568 B1 offenbart eine Bodenversteifungsstruktur nach dem Oberbegriff des Anspruchs 1.

Aufgabe der Erfindung ist es; in Verbesserung des Standes der Technik eine Bodenversteifungsstruktur an Kraftfahrzeugen zu schaffen, die geeignet ist, bei Krafteinleitung infolge beispielsweise eines Frontalcrashes möglichst eine Vielzahl von Einzelbauteilen der Fahrzeugkarosserie in die Kraftweiterleitung bzw. Kraftaufnahme einzubeziehen, ohne dass für die Fahrzeuginsassen nachteilige Verformungen der Fahrgastzelle zu verzeichnen sind.

Erfindungsgemäß wird die Aufgabe durch eine Bodenversteifungsstruktur an Kraftfahrzeugen mit zwei beidseitig des Kraftfahrzeugs angeordneten Längsträgern, die vom Vorderwagen ausgehend und das Antriebsaggregat abstützend höhenversetzt nach unten unter das Bodenblech der Fahrgastzelle des Kraftfahrzeugs geführt sind und sich schräg nach außen durchgängig bis in den hinteren Bereich der Fahrgastzelle in die unmittelbare Nähe eines Schwellers und eines hinteren Bodenquerträgers erstrecken, derart gelöst, dass zwischen jedem Längsträger und einem Tunnelelement wenigstens ein weiteres Längsträgerelement von unten gegen das Bodenbölech gesetzt ist.

Gemäß einer besonders vorteilhaften Ausgestaltung der Erfindung stützen sich die Längsträger im Wesentlichen an einem im Bereich des vorderen Fußraumes der Fahrgastzelle quer zur Fahrzeuglängsachse angeordneten vorderen Bodenquerträger und im hinteren Bereich der Fahrgastzelle an einem steifen Karosseriebauteil, wie einem Knotenelement, ab.

In einer weiteren Ausgestaltung der Erfindung ist vorgesehen, dass die Längsträger von vom nach hinten eine Abstufung im Querschnitt vom höheren zum niederen aufweisen.

Weiterhin ist vorgesehen, dass die Längsträger und/oder der vordere Bodenquerträger aus umgeformten Stahlblech, welches nach der tailored-blank-Technik gefertigt ist, oder aus höherfestem Stahl bestehen.

Ebenso wird als erfindungsgemäß angesehen, dass der vordere Bodenquerträger im Wesentlichen endseitig an den Schwellern und mittig an einem in Fahrzeuglängsrichtung innerhalb der Fahrgastzelle angeordneten Tunnelelement festgelegt ist.

Eine weitere erfindungsgemäße Maßnahme sieht vor, dass der vordere Bodenquerträger mittels Stegblechen an ausgeschnittenen Schwellern festgelegt ist.

Fernerhin kann der vordere Bodenquerträger durch ein offenes Hohlprofil, welches von innerhalb der Fahrgastzelle gegen ein nach oben geführtes Bodenblech gesetzt ist oder durch wenigstens zwei aufeinandergesetzte Profilschalen, die ihrerseits ein geschlossenes Hohlprofil ausbilden und sich an ein Bodenblech anschließen, gebildet sein.

Wie bereits oben dargetan ist zwischen jedem Längsträger und dem Tunnelelement wenigstens ein weiteres Längsträgerelement von unten gegen das Bodenblech gesetzt. Optional kann diesem weiteren Längsträgerelement fahrgastzellenseitig gegenüberliegend ein Aufsatzträger zugeordnet sein.

Als zweckmäßig im Sinne der Erfindung wird des Weiteren angesehen, dass fahrgastzellenseitig wenigstens im Verbindungseckbereich von Tunnelelement, vorderen Bodenquerträger und Bodenblech auf dem Bodenblech ein gegebenenfalls bis in die Kontur des Tunnelelementes reichendes Verstärkungsblech aufgebracht ist.

In Fortbildung der Erfindung ist noch vorgesehen, dass jeder Längsträger mit einem in nahezu gleicher Ebene nebengeordneten A-Säulen-Verbindungselement fest verbunden ist. Schlußendlich ist vorgesehen, den Längsträgern und/oder den Längsträgerelementen Aufnahmen zur Befestigung eines Hilfsrahmens zuzuordnen.

Die Erfindung wird nachstehend anhand der in den Zeichnungen schematisch dargestellten Ausführungsbeispiele näher erläutert. Es zeigen:
- Figur 1: die erfindungsgemäße Bodenversteifungsstruktur eines Kraftfahrzeugs, vorliegend eines PKW's, in einer perspektivischen Ansicht von unten,
- Figur 2: die perspektivische Ansicht der Bodenversteifungsstruktur nach Fig. 1 von innerhalb der Fahrgastzelle gegen den vorderen Bodenquerträger gesehen,
- Figur 3: den Schnitt I-I nach Fig. 2,
- Figur 4: den Schnitt II-II nach Fig. 2,
- Figur 5: die schematische Darstellung einer geeigneten Anbindung des Bodenquerträgers an die Schweller,
- Figur 6: die schematische Darstellung der Ausbildung des vorderen Bodenquerträgers in einer ersten Ausführungsvariante,
- Figur 7: die schematische Darstellung der Ausbildung des vorderen Bodenquerträgers in einer weiteren Ausführungsvariante.

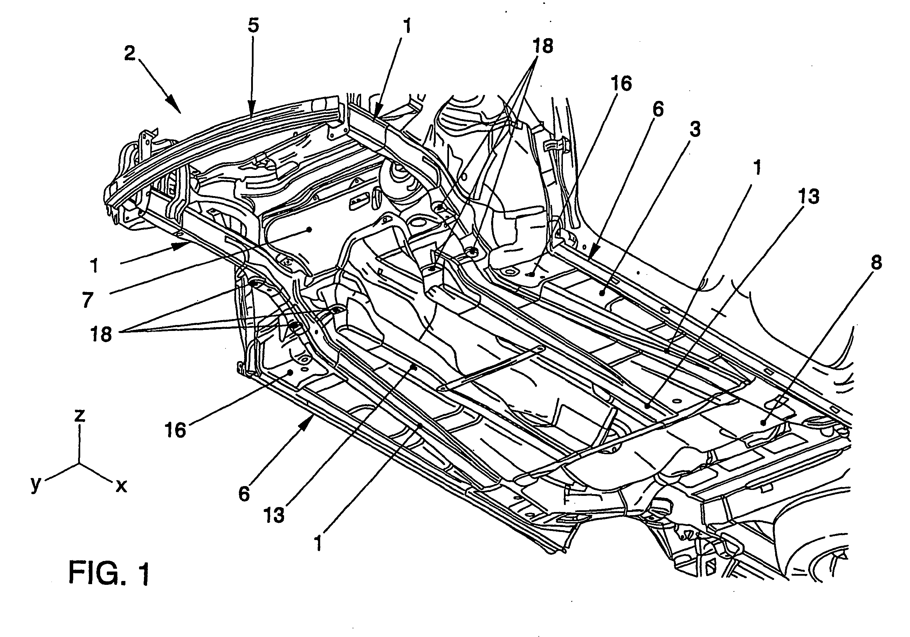

Fig. 1 zeigt den vorderen Unterbodenbereich eines Kraftfahrzeugs in einer perspektivischen Ansicht mit einer bevorzugten Ausführungsform der Bodenversteifungsstruktur. Diese besteht im Wesentlichen aus zwei beidseitig des Kraftfahrzeugs angeordneten Längsträgern 1, die vom Vorderwagen 2 ausgehend und das nicht näher dargestellte Antriebsaggregat abstützend höhenversetzt nach unten unter das Bodenblech 3 der Fahrgastzelle 4 geführt sind. Frontseitig sind die beiden Längsträger 1 durch einen Stoßfänger 5 miteinander verbunden. Die seitlich äußerste Begrenzung der Kraftfahrzeugkarosserie bilden sogenannte beidseitig sich jeweils in Fahrzeuglängsrichtung erstreckende Schweller 6, die Ihrerseits an einem quer zur Fahrzeuglängsachse angeordneten vorderen Bodenquerträger 7 und einem hinteren Bodenquerträger 8 angebunden sind.

Erfindungsgemäß erstrecken sich die Längsträger 1 jeweils schräg nach außen durchgängig bis in den hinteren Bereich der Fahrgastzelle 4 in die unmittelbare Nähe des Schwellers 6 und des hinteren Bodenquerträgers 8.

Mit dieser besonderen Maßnahme wird erreicht, dass im Falle eines Frontalcrashes die einwirkenden Kräfte vorteilhaft bis in den Hinterwagen weitergeleitet werden können und somit im Vergleich zum Stand der Technik ein erheblich größerer Karosseriebereich in die Kraftweiterleitung und - aufnahme einbezogen werden kann.

Die Längsträger 1 stützen sich dabei im Wesentlichen an dem im Bereich des vorderen Fußraumes 9 der Fahrgastzelle 4 angeordneten vorderen Bodenquerträger 7 und in Höhe des hinteren Bereiches der Fahrgastzelle 4 an einem nicht näher dargestellten steifen Karosseriebauteil, wie einem Knotenelement, ab und sind vorzugsweise mit diesen Bauteilen verschweißt. Ferner ist wenigstens abschnittsweise eine feste Verbindung durch Schweißen mit dem Bodenblech 3 vorgesehen, um Materialschwingungen desselben, einhergehend mit störenden Geräuschen, zu unterbinden.

In umfangreichen Versuchen wurde gefunden, dass eine Abstufung des Querschnitts der Längsträger von vorn nach hinten zum niederen sich äußerst vorteilhaft auf die gewünschte Kraftweiterleitung bis in den Bereich des hinteren Bodenquerträgers 8 auswirkt. Weiterhin konnte durch diese Maßnahme das Gewicht der Bodenversteifungsstruktur auf ein notwendiges Minimum reduziert werden, woraus wiederum Materialkosteneinsparungen zu verzeichnen sind.

Um eine noch höhere Versteifung der Bodenversteifungsstruktur, insbesondere in definierten, besonders beanspruchten Trägerbereichen realisieren zu können, ist es angezeigt, die Längsträger 1 und/oder den vorderen Bodenquerträger 7 aus umgeformten Stahlblech, welches nach der an sich bekannten tailord-blank-Technik gefertigt ist, auszubilden. Ebenso kann es bei besonders hoher Beanspruchung, beispielsweise bei Offroad-Fahrzeugen angezeigt sein, die Längsträger 1 und/oder den vorderen Bodenquerträger 7 aus höherfestem Stahl auszubilden.

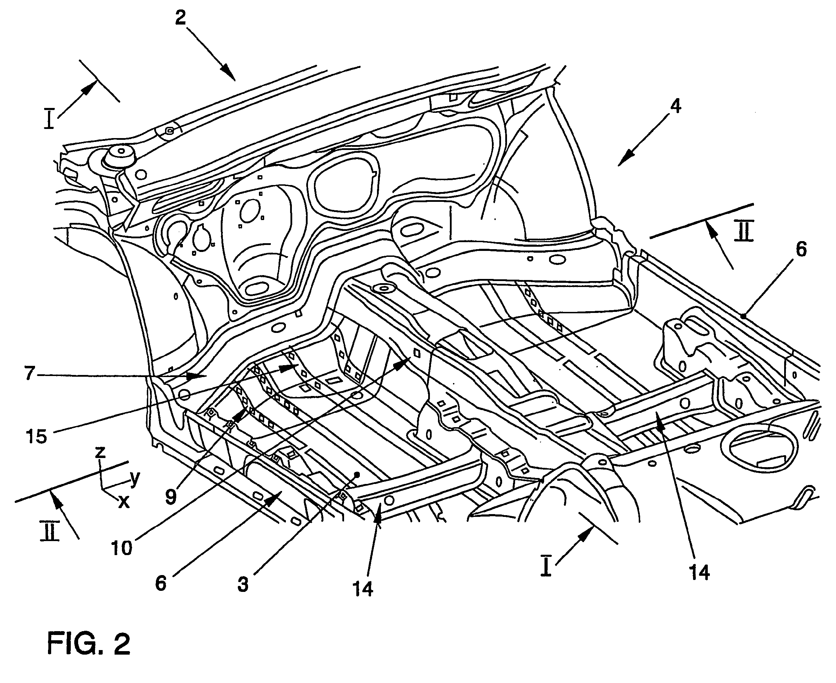

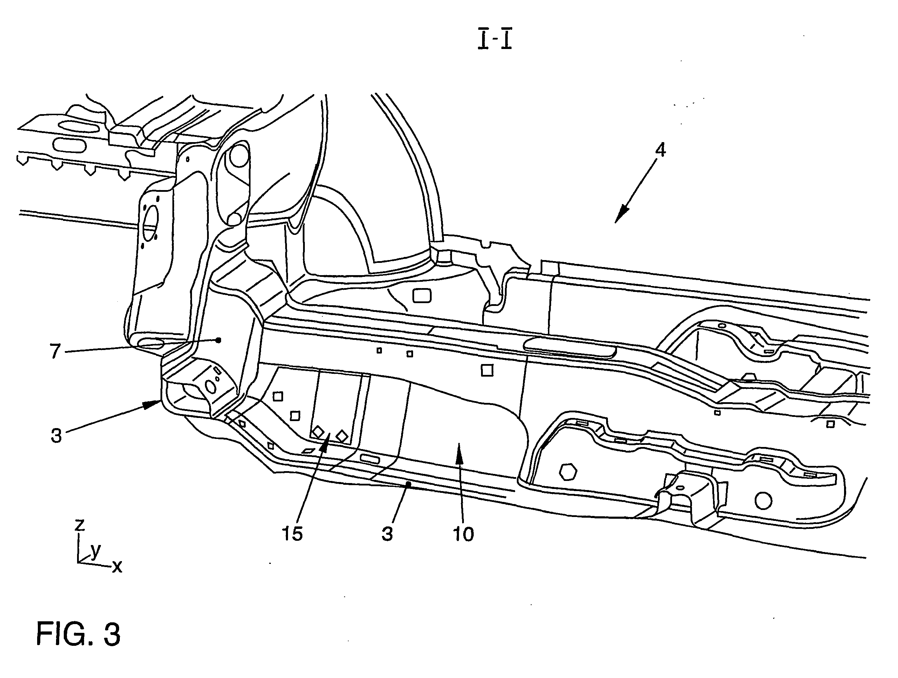

Gemäß den Fig. 2 bis 4 ist bekanntermaßen im Fahrzeugmittenbereich und in Fahrzeuglängsrichtung ausgerichtet ein die Fahrzeugkarosserie stabilisierendes Tunnelelement 10 angeordnet und vorzugsweise aus einem hutförmigen nach innen weisen Blech ausgebildet. Zur Erzielung einer weiteren Versteifung der Fahrzeugkarosserie, insbesondere eines erhöhten Schutzes der Fahrgastzelle 4 vor unerwünschter Verformung im Crashfall, ist der vordere Bodenquerträger 7 sowohl an den Schwellern 6 als auch am besagten Tunnelelement 10 festgelegt.

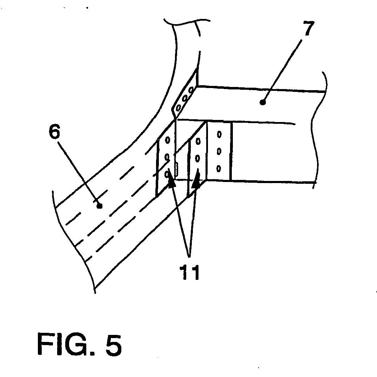

Als vorteilhaft hat sich weiterhin erwiesen, den vorderen Bodenquerträger 7 an ausgeschnittenen Schwellern 6 mittels sogenannter Stegbleche 11 festzulegen. Durch diese Maßnahme wird eine besonders steife Verbindung zwischen vorderen Bodenquerträger 7 und Schweller 6, ähnlich einem Knotenelement erzeugt (Fig. 5).

Den Fig. 2 bis 4 und 6 ist des Weiteren ein vorderer Bodenquerträger 7 zu entnehmen, der seinerseits durch ein offenes Hohlprofil gebildet ist, welches von innerhalb der Fahrgastzelle 4 gegen ein nach oben geführtes Bodenblech 3 gesetzt und mit diesem fest verbunden, vorzugsweise verschweiß ist. An dieser besonders steifen Konstruktion in Form eines geschlossenen Hohlprofils stützen sich, wie bereits oben dargetan, die Längsträger 1 ab.

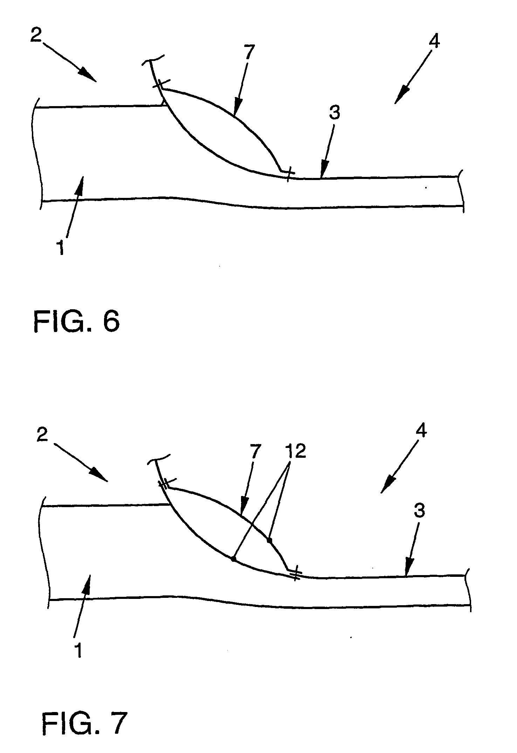

Eine weitere Möglichkeit der Erzeugung eines geeigneten vorderen Bodenquerträgers 7 ist in Fig. 7 gezeigt. Dieser besteht aus wenigstens zwei aufeinandergesetzten Profilschalen 12, die ihrerseits ebenfalls ein geschlossenes Hohlprofil ausbilden. An dieses Hohlprofil schließt sich das Bodenblech 3 an.

Eine noch größere Versteifung der Fahrzeugkarosserie wird erreicht, indem wie vorliegend zwischen jedem Längsträger 1 und dem Tunnelelement 10 wenigstens ein weiteres Längsträgerelement 13 angeordnet und von unten gegen das Bodenblech 3 gesetzt wird (Fig. 1). Dieses Längsträgerelement 13 erstreckt sich vorliegend vom vorderen Bodenquerträger 7 bis in Höhe von innerhalb der Fahrgastzelle 4 angeordneten Sitzquerträgern 14, die ihrerseits sich jeweils in Fahrzeugquerrichtung zwischen dem Tunnelelement 10 und einem Schweller 6 erstrecken und an diesen sowie am Bodenblech 3 befestigt, vorzugsweise mit diesen verschweißt sind. Denkbar ist es jedoch auch, das Längsträgerelement 13 bis zum hinteren Bodenquerträger 8 zu führen und an diesem anzuschließen (nicht näher dargestellt).

Zusätzlich kann dem Längsträgerelement 13 fahrgastzellenseitig gegenüberliegend noch ein sogenannter Aufsatzträger zugeordnet sein (nicht näher dargestellt).

Ferner hat sich in den umfangreichen Versuchen herausgestellt, dass insbesondere der Bereich des Fußraumes gegen Verformung anfällig und demgemäß zu schützen ist. Zu diesem Zwecke ist gemäß Fig. 2 fahrgastzellenseitig wenigstens im Verbindungsbereich von Tunnelelement 10, vorderem Bodenquerträger 7 und Bodenblech 3 auf dem Bodenblech 3 ein vorliegend sich bis in die Kontur des Tunnelelementes 10 reichendes Verstärkungsblech 15 aufgebracht.

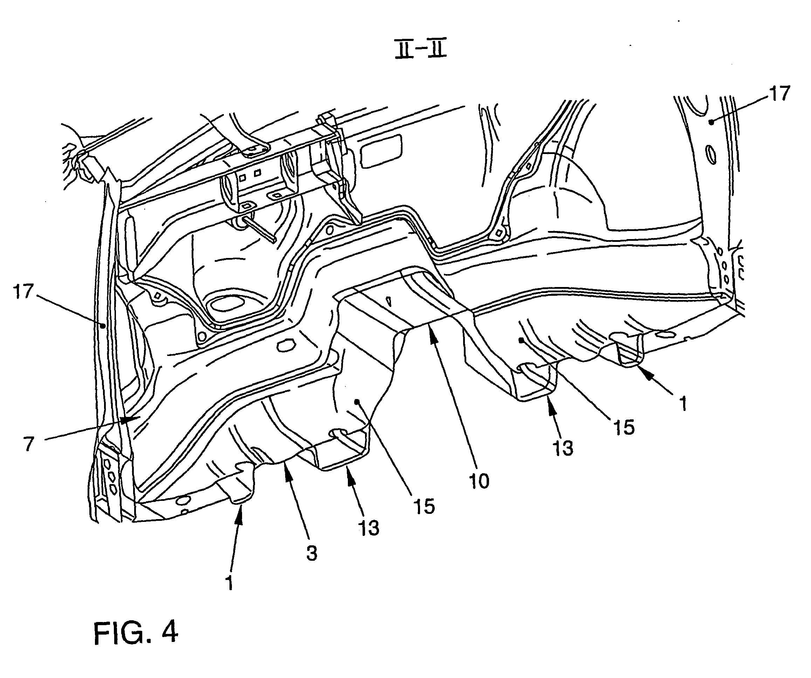

Wie in Fig. 1 ersichtlich, ist es weiterhin zu diesem Zwecke angezeigt, seitlich außen ein sogenanntes A-Säulen-Verbindungselement 16 vorzusehen, welches als Blechformteil eine besonders steife Verbindung nach Art eines Knotenelementes zwischen der in Fig. 4 gezeigten A-Säule 17, dem vorderen Bodenquerträger 7, einem Längsträger 1 und einem Schweller 6 realisiert.

Die vorstehenden Maßnahmen sind zum einen dazu geeignet, die Kraftweiterleitung infolge beispielsweise eines Frontalcrashes in eine Vielzahl von Einzelbauteilen der Fahrzeugkarosserie zu fördern, zum anderen aber auch die Fahrgastzelle 4 umfassend vor Deformierung zu schützen.

Fernerhin haben sich die Längsträger 1 und vorliegend auch die weiteren Längsträgerelemente 13 als besonders geeignet erwiesen, an diesen einen an sich bekannten und nicht näher dargestellten Hilfsrahmen abzustützen. Demgemäß sind denselben entsprechende Aufnahmen 18 zur Befestigung des besagten Hilfsrahmens zugeordnet worden (Fig. 1).

## Patentansprüche

1. Bodenversteifungsstruktur an Kraftfahrzeugen mit zwei beidseitig des Kraftfahrzeugs angeordneten Längsträgern (1), die vom Vorderwagen ausgehend und das Antriebsaggregat abstützend höhenversetzt nach unten unter das Bodenblech (3) der Fahrgastzelle (4) des Kraftfahrzeugs geführt sind, wobei jeder Längsträger (1) sich schräg nach außen durchgängig bis in den hinteren Bereich der Fahrgastzelle (4) in die unmittelbare Nähe eines Schwellers (6) und eines hinteren Bodenquerträgers (8) erstreckt,
**dadurch gekennzeichnet, dass**
zwischen jedem Längsträger (1) und einem Tunnelelement (10) wenigstens ein weiteres Längsträgerelement (13) von unten gegen das Bodenblech (3) gesetzt ist.

2. Bodenversteifungsstruktur nach Anspruch 1,
**dadurch gekennzeichnet, dass**
die Längsträger (1) sich im Wesentlichen an einem im Bereich des vorderen Fußraumes der Fahrgastzelle (4) quer zur Fahrzeuglängsachse angeordneten vorderen Bodenquerträger (7) und in Höhe des hinteren Bereiches der Fahrgastzelle (4) an einem steifen Karosseriebauteil, wie einem Knotenelement, abstützen.

3. Bodenversteifungsstruktur nach einem der Ansprüche 1 und 2,
**dadurch gekennzeichnet, dass**
die Längsträger (1) von vom nach hinten eine Abstufung im Querschnitt vom höheren zum niederen aufweisen.

4. Bodenversteifungsstruktur nach einem der Ansprüche 1 bis 3,
**dadurch gekennzeichnet, dass**
die Längsträger (1) und/oder der vordere Bodenquerträger (7) aus umgeformten Stahlblech, welches nach der tailored-blank-Technik gefertigt ist, bestehen.

5. Bodenversteifungsstruktur nach einem der Ansprüche 1 bis 3,
**dadurch gekennzeichnet, dass**
die Längsträger (1) und/oder der vordere Bodenquerträger (7) aus höherfestem Stahl bestehen.

6. Bodenversteifungsstruktur nach Anspruch 2,
**dadurch gekennzeichnet, dass**
der vordere Bodenquerträger (7) im Wesentlichen endseitig an den Schwellern (6) und mittig an einem in Fahrzeuglängsrichtung innerhalb der Fahrgastzelle (4) angeordneten Tunnelelement (10) festgelegt ist.

7. Bodenversteifungsstruktur nach Anspruch 6,
**dadurch gekennzeichnet, dass**
der vordere Bodenquerträger (7) mittels Stegblechen (11) an ausgeschnittenen Schwellern (6) festgelegt ist.

8. Bodenversteifungsstruktur nach einem der Ansprüche 2 bis 7,
**dadurch gekennzeichnet, dass**
der vordere Bodenquerträger (7) durch ein offenes Hohlprofil gebildet ist, welches von innerhalb der Fahrgastzelle (4) gegen ein nach oben geführtes Bodenblech (3) gesetzt ist.

9. Bodenversteifungsstruktur nach einem der Ansprüche 2 bis 7,
**dadurch gekennzeichnet, dass**
der vordere Bodenquerträger (7) durch wenigstens zwei aufeinandergesetzte Profilschalen (12) gebildet ist, die ihrerseits ein geschlossenes Hohlprofil ausbilden und sich an ein Bodenblech (3) anschließen.

10. Bodenversteifungsstruktur nach einem der Ansprüche 1 bis 9,
**dadurch gekennzeichnet, dass**
jedem weiteren Längsträgerelement (13) fahrgastzellenseitig gegenüberliegend ein Aufsatzträger zugeordnet ist.

11. Bodenversteifungsstruktur nach einem der Ansprüche 1 bis 10,
**dadurch gekennzeichnet, dass**
fahrgastzellenseitig wenigstens im Verbindungseckbereich von Tunnelelement (10), vorderen Bodenquerträger (7) und Bodenblech (3) auf dem Bodenblech (3) ein gegebenenfalls bis in die Kontur des Tunnelelementes (10) reichendes Verstärkungsblech (15) aufgebracht ist.

12. Bodenversteifungsstruktur nach einem der Ansprüche 1 bis 11,
**dadurch gekennzeichnet, dass**
jeder Längsträger (1) mit einem in nahezu gleicher Ebene nebengeordneten A-Säulen-Verbindungselement (16) fest verbunden ist.

13. Bodenversteifungsstruktur nach einem der Ansprüche 1 bis 12,
**dadurch gekennzeichnet, dass**
den Längsträgern (1) und/oder den Längsträgerelementen (13) Aufnahmen (18) zur Befestigung eines Hilfsrahmens zugeordnet sind.

## Claims

1. Floor-stiffening structure in motor vehicles with two longitudinal members (1) arranged on either side of the motor vehicle which are guided in a vertically offset manner from the forward car section downward below the floor panel (3) of the passenger cell (4) of the motor vehicle and which support the drive unit, each longitudinal member (1) extending obliquely outwardly and in a continuous manner to the rear area of the passenger cell (4), immediately adjacent to a sill (6) and a rear crossmember (8) of the floor, **characterized in that** at least one further longitudinal member element (13) is placed from below against the floor panel (3) between each longitudinal member (1) and a tunnel element (10).

2. Floor-stiffening structure according to Claim 1, **characterized in that** the longitudinal members (1) are substantially supported on a front crossmember (7) of the floor arranged in the area of the front footwell of the passenger cell (4), transversely to the longitudinal axis of the vehicle and level with the rear area of the passenger cell (4) on a rigid bodywork component, such as a joining element.

3. Floor-stiffening structure according to one of Claims 1 and 2, **characterized in that**, from front to back, the longitudinal members (1) have a stepped portion in cross section from top to bottom.

4. Floor-stiffening structure according to one of Claims 1 to.3, **characterized in that** the longitudinal members (1) and/or the front crossmember (7) of the floor consist of formed sheet steel, which is produced according to the tailored blank technique.

5. Floor-stiffening structure according to one of Claims 1 to 3, **characterized in that** the longitudinal members (1) and/or the front crossmember (7) of the floor consist of high-strength steel.

6. Floor-stiffening structure according to Claim 2, **characterized in that** the front crossmember (7) of the floor is fixed substantially at the end face to the sills (6) and centrally to a tunnel element (10) arranged in the longitudinal direction of the vehicle inside the passenger cell (4).

7. Floor-stiffening structure according to Claim 6, **characterized in that** the front crossmember (7) of the floor is fixed by means of web plates (11) to sills (6) with cut-outs.

8. Floor-stiffening structure according to one of Claims 2 to 7, **characterized in that** the front crossmember (7) of the floor is formed by an open hollow profile, which is placed from inside the passenger cell (4) against an upwardly extending floor panel (3)

9. Floor-stiffening structure according to one of Claims 2 to 7, **characterized in that** the front crossmember (7) of the floor is formed by at least two superimposed profile shells (12) which in turn form a closed hollow profile and adjoin a floor panel (3).

10. Floor-stiffening structure according to one of Claims 1 to 9, **characterized in that** an add-on member is associated with each further longitudinal member element (13) opposite the passenger cell side.

11. Floor-stiffening structure according to one of Claims 1 to 10, **characterized in that** on the passenger cell side, at least in the connecting corner region of the tunnel element (10), the front crossmember (7) of the floor and the floor panel (3), a reinforcing plate (15) is attached to the floor panel (3), extending optionally as far as the contour of the tunnel element (10).

12. Floor-stiffening structure according to one of Claims 1 to 11, **characterized in that** each longitudinal member (1) is rigidly connected to a coordinating A-pillar connecting element (16) in almost the same plane.

13. Floor-stiffening structure according to one of Claims 1 to 12, **characterized in that** receivers (18) for fixing a subframe are associated with the longitudinal members (1) and/or the longitudinal member elements (13).

## Revendications

1. Structure de renfort du plancher de véhicules automobiles comprenant deux supports longitudinaux (1) disposés de part et d'autre du véhicule automobile, qui sont guidés depuis la partie avant, en supportant l'ensemble d'entraînement, de manière décalée en hauteur vers le bas sous la tôle de plancher (3) de l'habitacle de conduite (4) du véhicule automobile, chaque support longitudinal (1) s'étendant obliquement vers l'extérieur de manière continue jusque dans la région arrière de l'habitacle de conduite (4) à proximité immédiate d'un bas de marche (6) et d'un support transversal arrière du plancher (8),
**caractérisée en ce que**
au moins un autre élément de support longitudinal (13) est placé par le dessous contre la tôle du plancher (3) entre chaque support longitudinal (1) et un élément de tunnel (10).

2. Structure de renfort du plancher selon la revendication 1,
**caractérisée en ce que**
les supports longitudinaux (1) s'appuient essentiellement contre un support transversal avant du plancher (7) disposé dans la région de l'espace avant pour les pieds de l'habitacle de conduite (4) transversalement à l'axe longitudinal du véhicule et à la hauteur de la région arrière de l'habitacle de conduite (4) contre un composant rigide de la carrosserie, comme un élément de noeud.

3. Structure de renfort du plancher selon l'une quelconque des revendications 1 et 2,
**caractérisée en ce que**
les supports longitudinaux (1) présentent, de l'avant vers l'arrière, un échelonnement dé section transversale allant du plus haut au plus bas.

4. Structure de renfort du plancher selon l'une quelconque des revendications 1 à 3,
**caractérisée en ce que**
les supports longitudinaux (1) et/ou le support transversal avant du plancher (7) se composent de tôle d'acier façonnée, qui est fabriquée selon la technique de tôle composée.

5. Structure de renfort du plancher selon l'une quelconque des revendications 1 à 3,
**caractérisée en ce que**
les supports longitudinaux (1) et/ou le support transversal avant du plancher (7) se composent d'acier de grande résistance.

6. Structure de renfort du plancher selon la revendication 2,
**caractérisée en ce que**
le support transversal avant du plancher (7) est fixé essentiellement du côté de l'extrémité aux bas de marche (6) et au centre à un élément de tunnel (10) disposé dans la direction longitudinale du véhicule à l'intérieur de l'habitacle de conduite (4).

7. Structure de renfort du plancher selon la revendication 6,
**caractérisée en ce que**
le support transversal avant du plancher (7) est fixé au moyen de tôles d'âme (11) à des bas de marche découpés (6).

8. Structure de renfort du plancher selon l'une quelconque des revendications 2 à 7,
**caractérisée en ce que**
le support transversal avant du plancher (7) est formé par un profilé creux ouvert qui est posé depuis l'intérieur de l'habitacle de conduite (4) contre une tôle de plancher (3) guidée vers le haut.

9. Structure de renfort du plancher selon l'une quelconque des revendications 2 à 7,
**caractérisée en ce que**
le support transversal avant du plancher (7) est formé par au moins deux coques profilées (12) superposées qui constituent pour leur part un profilé creux fermé et qui se raccordent à une tôle de plancher (3).

10. Structure de renfort du plancher selon l'une quelconque des revendications 1 à 9,
**caractérisée en ce que**
l'on associe à chaque élément de support longitudinal supplémentaire (13) un support de couronnement qui lui est opposé du côté de l'habitacle de conduite.

11. Structure de renfort du plancher selon l'une quelconque des revendications 1 à 10,
**caractérisée en ce que**
du côté de l'habitacle de conduite, au moins dans la région du coin de connexion de l'élément de tunnel (10), du support transversal avant du plancher (7) et de la tôle de plancher (3) sur la tôle de plancher (3), est disposée une tôle de renfort (15) s'étendant éventuellement jusque dans le contour de l'élément de tunnel (10).

12. Structure de renfort du plancher selon l'une quelconque des revendications 1 à 11,
**caractérisée en ce que**
chaque support longitudinal (1) est connecté fixement à un élément de connexion de la colonne A (16) adjacent dans pratiquement le même plan.

13. Structure de renfort du plancher selon l'une quelconque des revendications 1 à 12,
**caractérisée en ce que**
des logements (18) pour la fixation d'un cadre auxiliaire sont associés aux supports longitudinaux (1) et/ou aux éléments des supports longitudinaux (13).
